(19) **Europäisches Patentamt / European Patent Office / Office européen des brevets**

(11) **EP 3 615 887 B1**

(12) **EUROPÄISCHE PATENTSCHRIFT**

(45) Veröffentlichungstag und Bekanntmachung des Hinweises auf die Patenterteilung:
**11.02.2026   Patentblatt 2026/07**

(21) Anmeldenummer: **18722421.7**

(22) Anmeldetag: **23.04.2018**

(51) Internationale Patentklassifikation (IPC):
**G01N 21/898** (2006.01)  **G01N 21/94** (2006.01)
**G01N 21/89** (2006.01)  **G01N 21/88** (2006.01)
**G01N 21/956** (2006.01)  **G06T 7/00** (2017.01)
**G01B 11/25** (2006.01)

(52) Gemeinsame Patentklassifikation (CPC):
**G01N 21/95623; G01B 11/2513; G01N 21/8806;
G01N 21/8851; G01N 21/8983; G01N 21/94;
G06T 7/97;** G01N 2021/8809; G01N 2021/8887;
G01N 2021/8905

(86) Internationale Anmeldenummer:
**PCT/EP2018/060294**

(87) Internationale Veröffentlichungsnummer:
**WO 2018/197389 (01.11.2018 Gazette 2018/44)**

(54) **MATERIALPRÜFUNG MIT WINKELVARIABLER BELEUCHTUNG**

MATERIAL TESTING BY MEANS OF ANGLE-VARIABLE ILLUMINATION

CONTRÔLE DE MATÉRIAU AVEC UN ÉCLAIRAGE À ANGLE VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2017   DE 102017108874**

(43) Veröffentlichungstag der Anmeldung:
**04.03.2020   Patentblatt 2020/10**

(73) Patentinhaber:
• **Carl Zeiss Industrielle Messtechnik GmbH
73447 Oberkochen (DE)**
• **Carl Zeiss Microscopy GmbH
07745 Jena (DE)**

(72) Erfinder:
• **STOPPE, Lars
07743 Jena (DE)**
• **MILDE, Thomas
07616 Nausnitz (DE)**
• **TOTZECK, Michael
73525 Schwäbisch Gmünd (DE)**

(74) Vertreter: **Kraus & Lederer PartGmbB et al
Thomas-Wimmer-Ring 15
80539 München (DE)**

(56) Entgegenhaltungen:
EP-A1- 0 689 046     DE-A1- 102012 106 584
DE-A1- 102014 112 242     DE-A1- 102014 113 258
US-A- 5 442 189     US-A1- 2004 105 093
US-A1- 2008 068 593     US-B1- 6 757 065
US-B1- 6 891 671

• GIACOMO BORACCHI ET AL: "Uniform Motion Blur in Poissonian Noise: Blur/Noise Tradeoff", IEEE TRANSACTIONS ON IMAGE PROCESSING, IEEE SERVICE CENTER, PISCATAWAY, NJ, US, vol. 20, no. 2, 1 February 2011 (2011-02-01), pages 592 - 598, XP011342057, ISSN: 1057-7149, DOI: 10.1109/TIP.2010.2062196
• REINHARD KLETTE, RYSZARD KOZERA: "Shape from Shading and Photometric Stereo Methods", 31 January 1999 (1999-01-31), pages 1 - 56, XP002782887, Retrieved from the Internet <URL:https://www.researchgate.net/publication/2423527_Shape_from_Shading_and_Photometric_Stereo_Methods> [retrieved on 20180709]

EP 3 615 887 B1

**(Forts. nächste Seite)**

- "Handbook of Mathematical Models in Computer Vision", 1 January 2006, SPRINGER-VERLAG, New York, ISBN: 978-0-387-26371-7, article E. PRADOS ET AL: "Shape From Shading", pages: 375 - 388, XP055491244, DOI: 10.1007/0-387-28831-7_23

**Beschreibung**

TECHNISCHES GEBIET

Die Erfindung betrifft ein optisches System mit einem Beleuchtungsmodul, das eingerichtet ist, um ein Probenobjekt mit mehreren winkelvariablen Beleuchtungsgeometrien zu beleuchten.

Die Erfindung betrifft Techniken, um basierend auf mehreren Übertragungsfunktion und mehreren Bildern des Probenobjekts ein Ergebnisbild zu bestimmen.

**HINTERGRUND**

Oftmals kann es bei der Materialprüfung erstrebenswert sein, ein Höhenprofil eines Probenobjekts zu erzeugen. Basierend auf dem Höhenprofil können dann beispielsweise Anomalien erkannt werden.

Eine Technik, um ein Höhenprofil zu bestimmen, ist das sogenannte "shape from shading" (SFS). Siehe z.B. Prados, Emmanuel, and Olivier Faugeras. "Shape from shading." Handbook of mathematical models in computer vision (2006): 375-388. SFS weist bestimmte Nachteile und Einschränkungen auf. Beispielsweise kann es oftmals kompliziert und aufwendig sein, eine genügend große Anzahl von Bildern zu erhalten, um ein Rekonstruktion des Höhenprofils durchzuführen. Außerdem können entsprechende Techniken zeitintensiv und fehleranfällig sein.

Die DE 102015110 339 A beschreibt eine Bestimmung eines Höhenprofils eines Prüfobjekts basierend auf einer komplementären Beleuchtung und einer Differenzbildberechnung.

KURZE BESCHREIBUNG DER ERFINDUNG

Deshalb besteht ein Bedarf für verbesserte Techniken zur Materialprüfung. Insbesondere besteht ein Bedarf für solche Techniken, die zumindest einige der oben genannten Einschränkungen und Nachteile beheben oder lindern.

Diese Aufgabe wird von den Merkmalen der unabhängigen Patentansprüche 1 und 13 gelöst. Die Merkmale der abhängigen Patentansprüche definieren Ausführungsformen.

Basierend auf dem Ergebnisbild nach Anspruch 1 können beispielsweise Anomalien im Ergebnisbild besonders gut sichtbar gemacht werden. Es wäre also möglich, dass die Steuerung ist weiterhin eingerichtet ist, um Anomalien im Ergebnisbild zu erkennen. Im Allgemeinen kann es mittels des Ergebnisbilds möglich sein, eine genaue Materialprüfung des Probenobjekts durchzuführen. Gemäß der beanspruchten Erfindung wird ein Höhenprofil des Probenobjekts sichtbar gemacht.

Ein Computerprogrammprodukt, welches allerdings nicht unter die beanspruchte Erfindung fällt, umfasst Programmcode, der von mindestens einem Prozessor ausgeführt werden kann. Das Ausführen des Programmcodes bewirkt, dass der mindestens eine Prozessor ein Verfahren ausführt. Das Verfahren umfasst das Beleuchten eines Probenobjekts mit mindestens einer winkelvariablen Beleuchtungsgeometrie. Das Verfahren umfasst ferner das Abbilden des mit der mindestens einen winkelvariablen Beleuchtungsgeometrie beleuchteten Probenobjekts auf einen Detektor. Das Verfahren umfasst weiterhin, basierend auf dem Abbild, das Erfassen von mindestens einem Bild des Probenobjekts. Das Verfahren umfasst weiterhin das Bestimmen eines Ergebnisbildes basierend auf einer Übertragungsfunktion und dem mindestens einen Bild.

Ein Computerprogramm, welches allerdings nicht unter die beanspruchte Erfindung fällt, umfasst Programmcode, der von mindestens einem Prozessor ausgeführt werden kann. Das Ausführen des Programmcodes bewirkt, dass der mindestens eine Prozessor ein Verfahren ausführt. Das Verfahren umfasst das Beleuchten eines Probenobjekts mit mindestens einer winkelvariablen Beleuchtungsgeometrie. Das Verfahren umfasst ferner das Abbilden des mit der mindestens einen winkelvariablen Beleuchtungsgeometrie beleuchteten Probenobjekts auf einen Detektor. Das Verfahren umfasst weiterhin, basierend auf dem Abbild, das Erfassen von mindestens einem Bild des Probenobjekts. Das Verfahren umfasst weiterhin das Bestimmen eines Ergebnisbild basierend auf einer Übertragungsfunktion und dem mindestens einen Bild.

Mittels solcher Techniken kann es möglich sein, Unebenheiten oder Verunreinigungen des Probenobjekts auf Grundlage des Ergebnisbilds z.B. durch Analyse des Höhenprofils oder durch Identifizierung von Anomalien zuverlässig zu erkennen. Dies beruht darauf, dass das Ergebnisbild ein Höhenprofil des Probenobjekts abbilden kann.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung, wie in den anliegenden Patentansprüchen definiert, zu verlassen.

KURZE BESCHREIBUNG DER FIGUREN

FIG. 1 illustriert schematisch ein optisches System gemäß verschiedener Beispiele, wobei das optische System ein Beleuchtungsmodul aufweist, das eingerichtet ist, um ein Probenobjekt mit einer winkelvariablen Beleuchtungsgeometrie zu beleuchten.

FIG. 2 illustriert schematisch das Beleuchtungsmodul mit einer Vielzahl von Beleuchtungselementen in größerem Detail.

FIG. 3 illustriert schematisch eine beispielhafte Beleuchtungsgeometrie, die mittels des Beleuchtungsmoduls zur Beleuchtung des Probenobjekts verwendet werden kann.

FIG. 4 illustriert schematisch eine beispielhafte Beleuchtungsgeometrie, die mittels des Beleuchtungsmoduls zur Beleuchtung des Probenobjekts verwendet werden kann.

FIG. 5 illustriert schematisch eine beispielhafte Beleuchtungsgeometrie, die mittels des Beleuchtungsmoduls zur Beleuchtung des Probenobjekts verwendet werden kann.

FIG. 6 illustriert schematisch eine Übertragungsfunktion, die gemäß verschiedener Beispiele beim Bestimmen eines Ergebnisbilds verwendet werden kann.

FIG. 7 illustriert schematisch eine Übertragungsfunktion, die gemäß verschiedener Beispiele beim Bestimmen eines Ergebnisbilds verwendet werden kann, wobei die Übertragungsfunktion gemäß FIG. 7 gegenüber der Übertragungsfunktion gemäß FIG. 8 skaliert ist.

FIG. 8 illustriert schematisch eine Übertragungsfunktion, die gemäß verschiedener Beispiele beim Bestimmen eines Ergebnisbilds verwendet werden kann.

FIG. 9 illustriert schematisch Übertragungsfunktionen, die gemäß verschiedener Beispiele zum Bestimmen eines Ergebnisbilds verwendet werden können.

FIG. 10 ist ein Flussdiagramm eines beispielhaften Verfahrens.

FIG. 11 illustriert schematisch ein Beleuchtungsmodul und einen Detektor in Auflichtgeometrie gemäß verschiedener Beispiele.

FIG. 12 illustriert schematisch ein Beleuchtungsmodul und einen Detektor in Auflichtgeometrie gemäß verschiedener Beispiele.

FIG. 13 illustriert schematisch ein Beleuchtungsmodul und einen Detektor in Auflichtgeometrie gemäß verschiedener Beispiele.

FIG. 14 illustriert schematisch ein Beleuchtungsmodul und einen Detektor in Auflichtgeometrie gemäß verschiedener Beispiele.

FIG. 15 illustriert verschiedene Bilder und Ergebnisbilder mit Höhenprofil gemäß verschiedener Beispiele sowie gemäß Referenzimplementierungen.

FIG. 16 ist ein Flussdiagramm eines beispielhaften Verfahrens.

DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.
In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken beschrieben, um ein Ergebnisbild mit maßgeschneidertem Kontrast zu bestimmen. Das Ergebnisbild stellt, gemäß der beanspruchten Erfindung, ein Höhenprofil des Probenobjekts bereit. Das Ergebnisbild kann deshalb zur Materialprüfung eines Probenobjekts verwendet werden.

Gemäß der beanspruchten Erfindung wird das Ergebnisbild durch digitale Nachbearbeitung von mehreren Bildern eines Probenobjekts bestimmt. Beispielsweise wäre es möglich, dass das eine oder die mehreren Bilder des Probenobjekts Intensitätsbilder sind, die selbst kein Höhenprofil darstellen.

Die mehreren Bilder des Probenobjekts sind gemäß der beanspruchten Erfindung mit unterschiedlichen Beleuchtungsgeometrien assoziiert. Dies bedeutet, dass die mehreren Bilder jeweils bei gleichzeitiger Beleuchtung des Probenobjekts mittels einer entsprechenden Beleuchtungsgeometrie durch einen Detektor erfasst werden.

Die unterschiedlichen Beleuchtungsgeometrien können beispielsweise mit unterschiedlichen Beleuchtungsrichtungen assoziiert sein. Die unterschiedlichen Beleuchtungsgeometrien bzw. assoziierte unterschiedliche Bilder können durch ZeitMultiplexen oder Frequenz-Multiplexen voneinander getrennt werden. Es wäre auch eine Trennung mittels unterschiedlicher Polarisationen möglich. Die Beleuchtungsgeometrien können eine Richtungsabhängigkeit aufweisen. beispielsweise können die Beleuchtungsgeometrien einen Gradienten der Beleuchtungsstärke entlang einer oder mehrerer Raumrichtungen aufweisen. Z.B. könnte die Beleuchtungsstärke stufenförmig entlang einer Raumrichtung variieren, etwa zwischen Null und einem endlichen Wert oder zwischen zwei unterschiedlichen endlichen Werten.

Das Probenobjekt könnte für das verwendete Licht nicht-lichtdurchlässig sein. Z.B. könnte das Probenobjekt ein Bulk-Festkörper-Element umfassen, z.B. ein Textil oder Stoffgewebe, ein metallisches Bauteil, usw. Gemäß der beanspruchten Erfindung wird das Beleuchtungsmodul und der Detektor in Auflichtgeometrie betrieben.

Gemäß der beanspruchten Erfindung werden mehrere Übertragungsfunktionen für die digitale Nachbearbeitung von mehreren Bildern zum Erhalten des Ergebnisbilds verwendet. Beispielsweise kann die Übertragungsfunktion eine Objektübertragungsfunktion und/oder eine Optikübertragungsfunktion des optischen Systems bezeichnen. Die Übertragungsfunktion kann geeignet sein, um bei einer bestimmten Beleuchtung und einem bestimmten Probenobjekt das mindestens eine Bild vorherzusagen. Beispielsweise kann die Übertragungsfunktion einen reellwertigen Anteil aufweisen und/oder einen imaginären Anteil aufweisen. Nachfolgend werden unter anderem Techniken beschrieben, um den imaginären Anteil der Übertragungsfunktion zu bestimmen. Aus Gründen der Einfachheit wird nachfolgend nicht jedes Mal darauf referenziert, dass die Techniken den imaginären Anteil der Übertragungsfunktion betreffen. In manchen Beispielen kann eine rein imaginäre Übertragungsfunktion ohne reellwertigen Anteil verwendet werden.

Dabei können unterschiedliche Techniken zum Bestimmen der Übertragungsfunktion verwendet werden. Je nach verwendeter Übertragungsfunktion können unterschiedliche Techniken zum Bestimmen des Ergebnisbilds verwendet werden. Gemäß der beanspruchten Erfindung basiert die Technik auf einer Tichonov Regularisierung, d.h. dort wird ein Ergebnisbild mittels inverser Fourier-Transformation und basierend auf der Übertragungsfunktion $H^*$ und ferner basierend auf der Ortsfrequenzraum-Repräsentation einer Kombination $\tilde{I}_{DPC}$ von zwei Bildern des Probenobjekts bei unterschiedlichen Beleuchtungsgeometrien bestimmt:

$$\mathcal{F}^{-1}\left\{\frac{\sum_j H_j^*(u)\cdot\tilde{I}_{DPC,j}(u)}{\sum_j\left|H_j(u)\right|^2+\alpha}\right\} \tag{1}$$

$\alpha$ ist ein Regularisierungsparameter. Dabei beschreibt $\tilde{I}_{DPC}$ die spektrale Zerlegung einer Kombination von zwei Bildern $I_T$ und $I_B$, die bei unterschiedlichen Beleuchtungsgeometrien, die zueinander komplementäre Halbkreise beleuchten, erfasst wurden:

$$I_{DPC}=\frac{I_T-I_B}{I_T+I_B} \tag{2}$$

**Dies sind** Beispiele. Im Allgemeinen muss die Beleuchtungsgeometrie beispielsweise nicht streng Halbkreisförmig sein. Z.B. könnten vier Leuchtdioden verwendet werden, die auf einem Halbkreis angeordnet sind. Z.B. könnten also definierte bzw. diskrete Beleuchtungsrichtungen verwendet werden, also etwas einzelne Leuchtdioden. Ferner könnte in Gl. 2 auch die Normalisierung auf Eins erfolgen, anstatt auf $I_T + I_B$, oder auf einen anderen Wert. Statt einer Verrechnung von $I_T$ und $I_B$ könnten in anderen Beispielen auch die Rohdaten selbst verwendet werden, also z.B. $I_{DPC} = I_T$

oder $I_{DPC} = I_B$. Durch die Bildung eines entsprechenden Quotienten in Gl. 2 können andernfalls störende Einflüsse wie sonstige Stoffeigenschaften, Farbe, etc. reduziert werden. Durch die Bildung der Differenz kann insbesondere ein Absorptionsanteil aufgrund eines reellwertigen Anteils der Übertragungsfunktion reduziert werden. $\tilde{I}_{DPC}$ ist proportional zum lokalen Anstieg der Phasenverschiebung aufgrund des Probenobjekts. Die Phasenverschiebung kann durch eine Änderung der Dicke des Probenobjekts bzw. der Topographie des Probenobjekts verursacht sein und/oder durch eine Änderung der optischen Eigenschaften.

Z.B. können zwei Bilder $I_{DPC,1}$ sowie $I_{DPC,2}$ bestimmt werden, einmal mit einem Paar von halbkreisförmigen Beleuchtungsgeometrien, die oben-unten in einer lateralen Ebene senkrecht zum Strahlengang angeordnet sind ($I_{DPC,1}$), und einmal mit einem Paar von halbkreisförmigen Beleuchtungsgeometrien, die links-rechts in der lateralen Ebene angeordnet sind ($I_{DPC,2}$). Dann kann auch eine Kombination von $I_{DPC,1}$ mit $I_{DPC,2}$ beim Bestimmen des Ergebnisbilds berücksichtigt werden, also durch Summation über den Summationsindex $j$ in Gl. 1.

Der Ortsfrequenzraum kann den zum Ortsraum konjugierten Raum bezeichnen. Zwischen dem Ortsraum und dem Ortsfrequenzraum kann durch Fourieranalyse und inverse Fourieranalyse transformiert werden. Ortsfrequenzen bezeichnen dabei den Kehrwehrt einer räumlichen Periodenlänge.

Solche Techniken beruhen auf bestimmten Annahmen und Vereinfachungen, beispielsweise im Falle der o.g. Formulierung einer schwachen Objektnäherung (engl. weak object approximation). In anderen Beispielen können aber andere Näherungen und Formalismen verwendet werden. Beispielsweise könnte eine andere Invertierung anstelle der Tichonov-Regularisierung verwendet werden, beispielsweise eine direkte Integration oder eine anderweitig ausgebildete Fourier-Filterung. Auch in solchen Abwandlungen können die grundlegenden Eigenschaften der Übertragungsfunktion, wie in den verschiedenen Beispielen hierin beschrieben, erhalten bleiben.

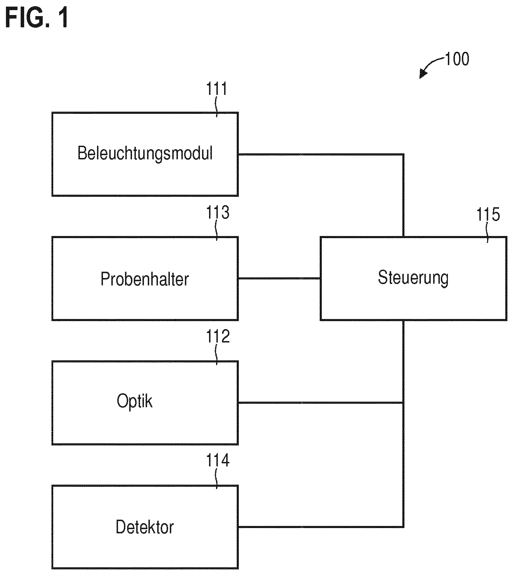

FIG. 1 illustriert ein beispielhaftes optisches System 100. Beispielsweise könnte das optische System 100 gemäß dem Beispiel der FIG. 1 ein Lichtmikroskop implementieren, in Auflichtgeometrie. Beispielsweise könnte ein entsprechendes Lichtmikroskop in Auflichtgeometrie zur Materialprüfung verwendet werden. Dazu kann ein Höhenprofil des Probenobjekts erstellt werden.

Mittels des optischen Systems 100 kann es möglich sein, kleine Strukturen eines von einem Probenhalter 113 fixierten Probenobjekts vergrößert darzustellen. Beispielsweise könnte das optische System 100 ein Weitfeldmikroskop implementieren, bei welchem eine Probe vollflächig beleuchtet wird. In manchen Beispielen kann die Abbildungsoptik 112 ein Abbild des Probenobjekts auf einem Detektor 114 erzeugen. Der Detektor 114 kann dann eingerichtet sein, um ein oder mehrere Bilder des Probenobjekts zu erfassen. Auch eine Betrachtung durch ein Okular ist denkbar.

In manchen Beispielen können Abbildungsoptiken 112 mit einer großen Apertur verwendet werden. Beispielsweise könnte die Abbildungsoptik 112 eine numerische Apertur von nicht kleiner als 0,2 aufweisen, optional von nicht kleiner als 0,3, weiter optional von nicht kleiner als 0,5. Beispielsweise könnte die Abbildungsoptik 112 ein Immersionsobjektiv aufweisen.

Das optische System 100 umfasst auch ein Beleuchtungsmodul 111. Das Beleuchtungsmodul 111 ist eingerichtet, um das Probenobjekt, das auf dem Probenhalter 113 fixiert ist, zu beleuchten. Beispielsweise könnte diese Beleuchtung mittels der Köhler'schen Beleuchtung implementiert werden. Dabei wird eine Kondensorlinse und eine Kondensor-Aperturblende verwendet. Dies führt zu einer besonders homogenen Intensitätsverteilung des zur Beleuchtung verwendeten Lichts in der Ebene des Probenobjekts. Beispielsweise kann eine partiell inkohärente Beleuchtung implementiert werden. Das Beleuchtungsmodul 111 könnte auch eingerichtet sein, um das Probenobjekt in Dunkelfeldgeometrie zu beleuchten.

In dem Beispiel der FIG. 1 ist das Beleuchtungsmodul 111 eingerichtet, um eine winkelvariable Beleuchtung zu ermöglichen. Dies bedeutet, dass mittels des Beleuchtungsmoduls 111 unterschiedliche Beleuchtungsgeometrien des zur Beleuchtung des Probenobjekts verwendeten Lichts implementiert werden können. Die unterschiedlichen Beleuchtungsgeometrien können einer Beleuchtung des Probenobjekts aus unterschiedlichen Beleuchtungsrichtungen entsprechen. Manchmal wird eine winkelvariable Beleuchtung deshalb auf als im Winkelraum strukturierte Beleuchtung bezeichnet.

Dabei sind in den verschiedenen hierin beschriebenen Beispielen unterschiedliche Hardware-Implementierungen möglich, um die unterschiedlichen Beleuchtungsgeometrien bereitzustellen. Beispielsweise könnte das Beleuchtungsmodul 111 mehrere einstellbare Beleuchtungselemente umfassen, die eingerichtet sind, um lokal Licht zu modifizieren oder auszusenden. Eine Steuerung 115 kann das Beleuchtungsmodul 111 bzw. die Beleuchtungselemente zum Implementieren einer bestimmten Beleuchtungsgeometrie ansteuern.

Beispielsweise könnten die Steuerung 115 als Mikroprozessor oder Mikrocontroller implementiert sein. Alternativ oder zusätzlich könnte die Steuerung 115 beispielsweise einen FPGA oder ASIC umfassen. Die Steuerung 115 kann alternativ oder zusätzlich auch den Probenhalter 113, die Abbildungsoptik 112, und / oder den Detektor 114 ansteuern.

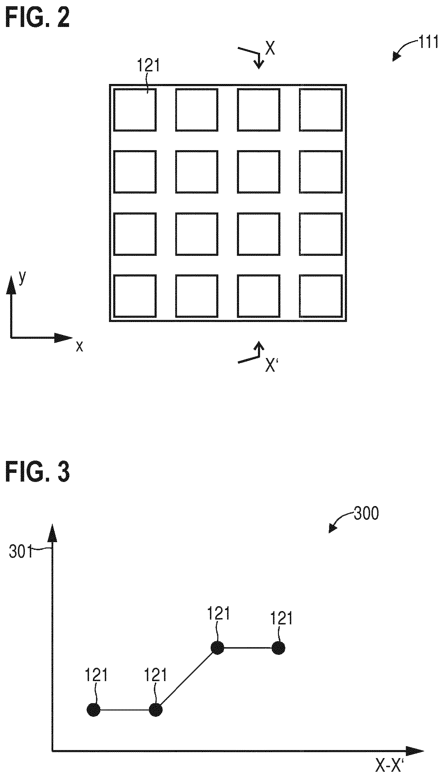

FIG. 2 illustriert Aspekte in Bezug auf das Beleuchtungsmodul 111. In FIG. 2 ist dargestellt, dass das Beleuchtungsmodul 111 eine Vielzahl von einstellbaren Beleuchtungselementen 121 in einer Matrixstruktur aufweist. Die Matrixstruktur ist dabei in einer Ebene senkrecht zum Strahlengang des Lichts orientiert (laterale Ebene; Ortsraumkoordinaten x, y).

Anstatt einer Matrixstruktur wäre es in anderen Beispielen auch möglich, andere geometrische Anordnungen der einstellbaren Elemente zu verwenden, beispielsweise ringförmig, halbkreisförmig etc.

In einem Beispiel könnten die einstellbaren Beleuchtungselemente 121 als Lichtquellen, beispielsweise als Leuchtdioden, implementiert sein. Dann wäre es zum Beispiel möglich, dass unterschiedliche Leuchtdioden mit unterschiedlicher Lichtstärke Licht zur Beleuchtung des Probenobjekts emittieren. Dadurch kann eine Beleuchtungsgeometrie implementiert werden. In einer weiteren Implementierung könnte das Beleuchtungsmodul 111 als räumlicher Lichtmodulator (Engl., spatial light modulator, SLM) implementiert sein. Der SLM kann ortsaufgelöst einen Eingriff in eine Kondensorpupille nehmen, was eine direkte Auswirkung auf die Bildgebung haben kann.

FIG. 3 illustriert Aspekte in Bezug auf eine beispielhafte Beleuchtungsgeometrie 300. In FIG. 3 ist die bereitgestellte Lichtstärke 301 für die verschiedenen einstellbaren Elemente 121 des Beleuchtungsmoduls 111 entlang der Achse X-X' aus FIG. 2 dargestellt. Die Beleuchtungsgeometrie 300 weist eine Abhängigkeit von der Position entlang der Achse X-X' auf und ist daher strukturiert.

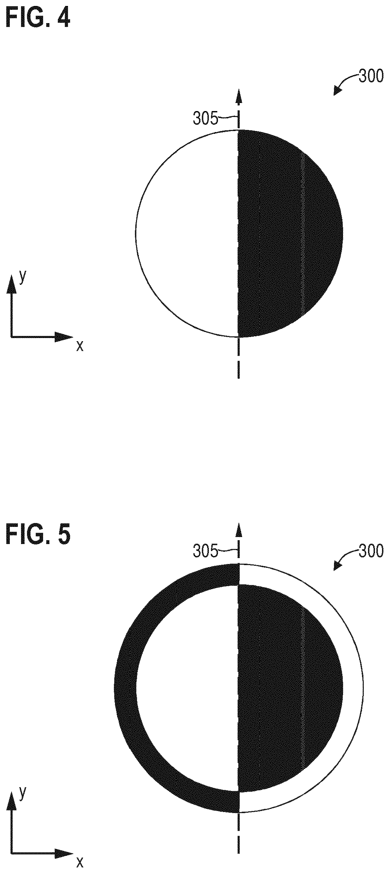

FIG. 4 illustriert Aspekte in Bezug auf eine beispielhafte Beleuchtungsgeometrie 300. FIG. 4 illustriert die Beleuchtungsgeometrie 300 abstrakt von dem verwendeten Beleuchtungsmodul 111. In dem Beispiel der FIG. 4 wird eine Beleuchtungsgeometrie 300 verwendet, bei der eine Seite beleuchtet wird (schwarze Farbe in FIG. 4) und die andere Seite nicht beleuchtet wird (weiße Farbe in FIG. 4). In FIG. 5 ist eine weitere beispielhafte Beleuchtungsgeometrie dargestellt (mit entsprechender Farbkodierung, wie bereits in Bezug auf FIG. 4 beschrieben).

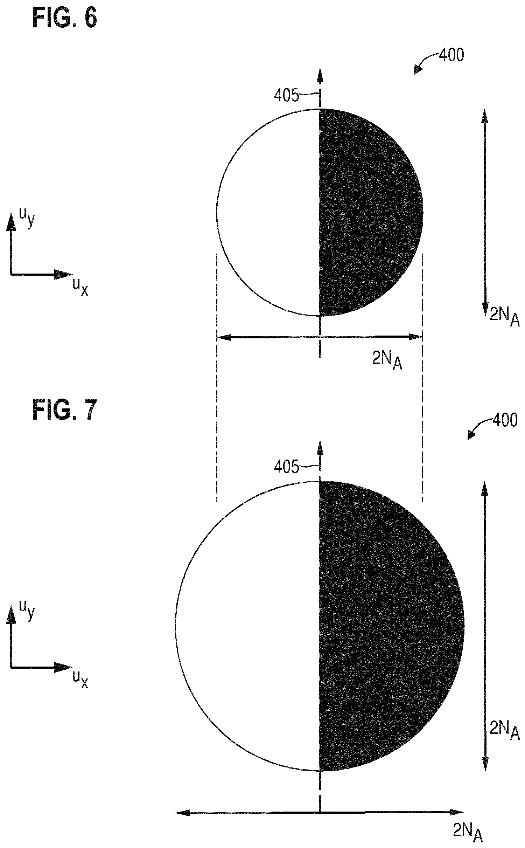

FIG. 6 illustriert Aspekte in Bezug auf eine beispielhafte Übertragungsfunktion 400 (wobei in FIG. 6 schwarz einen Betrag von +1 und weiß einen Betrag von -1 codiert; die Koordinaten $u_x$ und $u_y$ sind im Ortsfrequenzraum definiert und entsprechen dort den Ortsraumkoordinaten x und y). Die Übertragungsfunktion 400 kann dazu verwendet werden, um basierend auf einem Bild, welches beispielsweise mit der Beleuchtungsgeometrie 300 gemäß dem Beispiel der FIG. 4 erfasst wurde, ein Ergebnisbild zu bestimmen. Das Ergebnisbild kann ein Höhenprofil des Probenobjekts beinhalten.

In dem Beispiel der FIG. 6 weist die Übertragungsfunktion 400 eine Symmetrieachse 405 auf, die einer Symmetrieachse 305 der Beleuchtungsgeometrie 300 entspricht. Dadurch kann es möglich sein, dass die Übertragungsfunktion 400 passend zu der Beleuchtungsgeometrie 300 gewählt wird. Dadurch kann das Ergebnisbild einen besonders starken Kontrast aufweisen.

In FIG. 6 ist auch der Durchmesser der Detektorapertur der Abbildungsoptik 112 dargestellt. Weil eine partiell inkohärente Beleuchtung verwendet wird, ist die Übertragungsfunktion bis zur zweifachen Größe der Detektorapertur der Abbildungsoptik 112 ungleich Null.

FIG. 7 illustriert auch Aspekte in Bezug auf eine Übertragungsfunktion 400. Das Beispiel der FIG. 7 entspricht dabei grundsätzlich dem Beispiel der FIG. 6. Jedoch ist in dem Beispiel der FIG. 6 die Größe der Detektorapertur größer als in dem Beispiel der FIG. 6 (vgl. horizontale gestrichelte Linien; $N_A$ bezeichnet die Größe der Detektorapertur).

Dabei ist aber die Übertragungsfunktion 400 entsprechend skaliert auf die in FIG. 7 im Vergleich zu FIG. 6 vergrößerte Detektorapertur. Beispielsweise könnte die Übertragungsfunktion 400 gemäß dem Beispiel der FIG. 6 als Referenz-Übertragungsfunktion dienen. Dann könnte zum Beispiel die Steuerung 115 eingerichtet sein, um die Übertragungsfunktion 400 gemäß dem Beispiel der FIG. 7 basierend auf einer Skalierung dieser Referenz-Übertragungsfunktion auf die vergrößerte Apertur der Abbildungsoptik 112 zu bestimmen.

Basierend auf solchen Techniken ist es möglich, dass eine besonders große Apertur für die Abbildungsoptik 112 verwendet wird, was bei bestimmten Anwendungsfällen zur Bildgebung mittels des optischen Systems 100 erstrebenswert sein kann.

Aus den Beispielen der FIGs. 6 und 7 ist ersichtlich, dass der Bereich, innerhalb welchem die Übertragungsfunktion 400 Werte ungleich Null annimmt, durch die Größe der Apertur der Abbildungsoptik 112 bestimmt sein kann.

Solche Techniken beruhen auf der Erkenntnis, dass es auch für solche, in Abhängigkeit der Größe der Apertur der Abbildungsoptik skalierte Übertragungsfunktionen 400 möglich sein kann, das Ergebnisbild mit einem aussagekräftigen Kontrast zu bestimmen - beispielsweise einem Höhenprofil des Probenobjekts. Dabei kann der Kontrast im Ergebnisbild in manchen Beispielen keine quantitative Beschreibung der Topographie des Probenobjekts beinhalten, jedoch eine qualitative Beschreibung der Topographie des Probenobjekts. Insbesondere kann die qualitative Beschreibung der Topographie des Probenobjekts konsistent im Bereich des gesamten Bilds bereitgestellt werden. Insbesondere im Vergleich zu Referenztechniken, bei denen unterschiedliche Ortsraumgradienten der Topographie des Probenobjekts - beispielsweise an gegenüberliegenden Kanten des Probenobjekts - mit unterschiedlichem Vorzeichen des Kontrasts im Ergebnisbild abgebildet werden, kann dies einen Vorteil aufweisen.

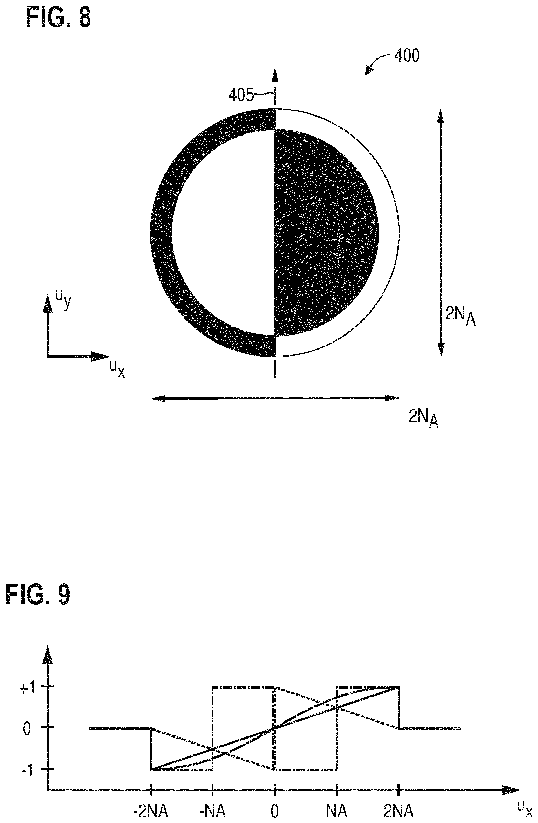

FIG. 8 illustriert Aspekte in Bezug auf eine Übertragungsfunktion 400 (wobei in FIG. 8 schwarz einen Betrag von +1 und weiß einen Betrag von -1 codiert; die Koordinaten $u_x$ und $u_y$ sind im Ortsfrequenzraum definiert und entsprechen dort den Ortsraumkoordinaten x und y). Die Übertragungsfunktion 400 kann dazu verwendet werden, um basierend auf einem Bild, welches beispielsweise mit der Beleuchtungsgeometrie 300 gemäß dem Beispiel der FIG. 5 erfasst wurde, ein Ergebnisbild zu bestimmen. In FIG. 8 ist auch der Durchmesser der Detektorapertur der Abbildungsoptik 112 dargestellt.

Aus den FIGs. 6-8 ist ersichtlich, dass die Übertragungsfunktion 400 in Abhängigkeit der winkelvariablen Beleuchtungsgeometrie 300 bestimmt werden kann. Insbesondere ist es möglich, dass die Geometrie der Übertragungsfunktion 400 im Ortsfrequenzraum die Beleuchtungsgeometrie 300 im Ortsraum nachbildet. Durch solche Techniken kann ein besonders starker Kontrast in dem Ergebnisbild erzielt werden, d.h. ein hohes Signal-zu-Rauschverhältnis beispielsweise für das Höhenprofil.

FIG. 9 illustriert Aspekte in Bezug auf verschiedene Übertragungsfunktionen 400 (unterschiedliche Übertragungsfunktionen sind in FIG. 9 mit der durchgezogene Linie, der gestrichelten Linie, der gepunkteten Linie, sowie der gestrichelten-gepunkteten Linie dargestellt).

Die in FIG. 9 dargestellten Übertragungsfunktionen 400 können beispielsweise für unterschiedliche Beleuchtungsgeometrien verwendet werden (in FIG. 9 sind die Beleuchtungsgeometrien nicht dargestellt).

In FIG. 9 ist die Übertragungsfunktion 400 entlang einer Achse $u_x$ des Ortsfrequenzraums dargestellt. In manchen Beispielen könnte die Übertragungsfunktion lediglich entlang einer Koordinate des Ortsfrequenzraums eine Variation aufweisen; in anderen Beispielen könnte aber eine Variation entlang zweier orthogonaler Achsen $u_x$ und $u_y$ vorliegen.

In dem Beispiel der FIG. 9 ist beispielsweise eine Übertragungsfunktion 400 als monoton steigende lineare Funktion ausgebildet (durchgezogene Linie). Außerdem ist in dem Beispiel der FIG. 9 eine weitere Übertragungsfunktion 400 als monoton steigende Sigmoid-Funktion ausgebildet (gestrichelte Linie). In dem Beispiel der FIG. 9 ist eine weitere Übertragungsfunktion 400 als gefaltete, monoton fallende, lineare Funktion ausgebildet (gepunktete Linie). In dem Beispiel der FIG. 9 ist eine weitere Übertragungsfunktion 400 als Stufenfunktion ausgebildet (gepunktete Linie).

Solche Ausbildungen von Übertragungsfunktionen 400 sind rein beispielhaft und in anderen Beispielen können anders ausgebildete Übertragungsfunktionen verwendet werden oder aber Überlagerungen der in dem Beispiel der FIG. 9 dargestellten Übertragungsfunktionen 400. Jedoch können die in den verschiedenen hierin beschriebenen Beispielen verwendeten Übertragungsfunktionen bestimmte Merkmale bzw. Charakteristiken aufweisen, die eine besonders gute Bestimmung des Ergebnisbildes ermöglichen. Solche Merkmale von verwendeten Übertragungsfunktionen werden nachfolgend beschrieben.

Aus den Beispielen der Übertragungsfunktionen 400 in FIG. 9 ist ersichtlich, dass es möglich ist, die Übertragungsfunktionen 400 für Ortsfrequenzen innerhalb der Apertur der Abbildungsoptik 112 ohne lokale Extremwerte auszubilden, d.h. ohne lokale Maxima oder Minima die kleiner wären, als die absoluten Extremwerte (d.h. die Amplituden von +1 bzw. -1 im Beispiel der FIG. 9). Dies kann durch eine monoton steigende oder fallende Übertragungsfunktion erzielt werden, oder durch eine Stufenfunktion.

Eine solche Vermeidung von lokalen Extremwerten kann insbesondere vorteilhafte Effekte in Bezug auf die Reduktion von Signalrauschen bzw. Artefakten im Ergebnisbild aufweisen. Manchmal kann es vorkommen, dass - beispielsweise baulich bedingt - eine Abweichung zwischen der tatsächlichen Apertur und der nominellen Apertur der Abbildungsoptik vorliegt. Dann kann die Position der lokalen Extremwerte der Übertragungsfunktion in Bezug auf die tatsächliche Apertur falsch im Ortsfrequenzraum positioniert sein; dies bewirkt, dass in den Bildern beinhaltete Frequenzen aufgrund der in Bezug auf die tatsächliche Apertur falsch im Ortsfrequenzraum positionierten lokalen Extremwerte irrtümlicherweise eine starke Verstärkung erfahren, was zu Artefakten im Ergebnisbild führen kann. Indem gemäß der verschiedenen hierin beschriebenen Beispiele eine Übertragungsfunktion ohne lokale Extremwerte innerhalb der Detektorapertur bzw. der doppelten Detektorapertur verwendet wird, kann eine solche irrtümliche Verstärkung von in den Bildern beinhalteten Frequenzen aufgrund eines verschoben positionierten lokalen Extremwerts der Übertragungsfunktion vermieden werden. Es resultiert eine gleichförmige Propagation der in den erfassten Bildern beinhalteten Frequenzen.

Aus den in FIG. 9 dargestellten Beispielen der Übertragungsfunktionen 400 ist ferner ersichtlich, dass Implementierungen möglich sind, bei denen die Übertragungsfunktion für Ortsfrequenzen innerhalb der Apertur der Abbildungsoptik 112 bzw. innerhalb der doppelten Apertur der Abbildungsoptik 112 keine Werte oder im Wesentlichen keine Werte gleich Null annimmt, d.h. lediglich endliche Werte ungleich Null annimmt. Im Allgemeinen kann es manchmal erstrebenswert sein, zu vermeiden, dass die Übertragungsfunktion für Ortsfrequenzen innerhalb der Apertur der Abbildungsoptik 112 bzw. innerhalb der doppelten Apertur der Abbildungsoptik 112 vergleichsweise kleine Werte - beispielsweise bezogen auf ein Maximum aller Betragswerte der Übertragungsfunktion für Ortsfrequenzen innerhalb des entsprechenden Bereichs - annimmt. Zum Beispiel wäre es möglich, dass die Übertragungsfunktion für Ortsfrequenzen innerhalb der Apertur oder der doppelten Apertur der Abbildungsoptik 112 keine Betragswerte <5 % eines Maximums aller Betragswerte der Übertragungsfunktion 400 für Ortsfrequenzen innerhalb der Apertur der Abbildungsoptik 112 aufweist, optional keine Werte <2 %, weiter optional keine Werte <0,5 %. Ein solches Verhalten kann z.B. durch eine Stufenfunktion bereitgestellt werden.

Solchen Techniken liegt die Erkenntnis zugrunde, dass Werte gleich Null für die Übertragungsfunktion 400 in einer Unterdrückung der entsprechenden in den Bildern beinhalteten Frequenzen entsprechen kann. Oftmals kann es aber erstrebenswert sein, dass innerhalb der Apertur der Abbildungsoptik 112 bzw. innerhalb der doppelten Apertur der Abbildungsoptik 112 keine Unterdrückung von entsprechenden in den Bildern beinhalteten Frequenzen erfolgt.

Aus dem Beispiel der FIG. 9 ist ferner ersichtlich, dass die dort dargestellten Übertragungsfunktionen für Ortsfrequenzen außerhalb der doppelten Apertur der Abbildungsoptik 112 Werte gleich Null annehmen. Im Allgemeinen kann es möglich sein, dass Übertragungsfunktionen verwendet werden, außerhalb der von der Abbildungsoptik 112 übertragenen Ortsfrequenzen Werte im Wesentlichen gleich Null annehmen, d.h. typischerweise außerhalb der einfachen Apertur oder der doppelten Apertur bei partiell phaseninkohärenter Beleuchtung. Beispielsweise wäre es möglich, dass die verwendeten Übertragungsfunktionen für Ortsfrequenzen außerhalb der einfachen oder doppelten Apertur der Abbildungsoptik keine Betragswerte >5 % eines Maximums aller Betragswerte der Übertragungsfunktionen für Ortsfrequenzen innerhalb der einfachen oder doppelten Apertur der Abbildungsoptik aufweisen, optional keine Werte größer als 2 %, weiter optional keine Werte größer als 0,5 %. Derart kann vermieden werden, dass Artefakte oder Rauschen im Ergebnisbild verstärkt wird.

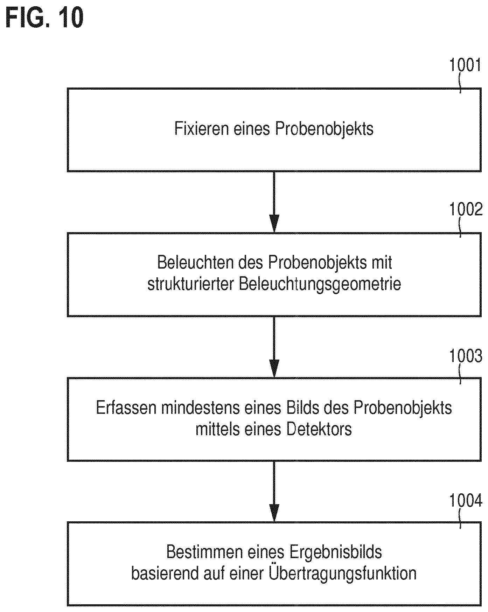

FIG. 10 ist ein Flussdiagramm eines beispielhaften Verfahrens. Zunächst wird in 1001 ein Probenobjekt fixiert, beispielsweise mithilfe eines Probenhalters. Beispielsweise könnte das Probenobjekt eine Materialprobe eines Bulk-Materials sein. 1001 ist optional.

Dann wird in 1002 das Probenobjekt mit mehreren Paaren von winkelvariablen Beleuchtungsgeometrien beleuchtet. Dazu kann ein entsprechendes Beleuchtungsmodul entsprechend angesteuert werden. Es wäre zum Beispiel möglich, dass das Probenobjekt mit mehreren Paaren von jeweils zwei komplementären Beleuchtungsgeometrien beleuchtet wird, die zum Beispiel halbkreisförmig ausgebildet sind und unterschiedlichen Halbkreisen entsprechen.

In 1003 werden mehrere Bilder des Probenobjekts mittels einer Abbildungsoptik sowie mittels eines Detektors, beispielsweise eines CMOS oder CCD-Sensors, erfasst. 1003 kann das entsprechende Ansteuern des Detektors umfassen. Die Bilder beinhalten jeweils ein Abbild des Probenobjekts. Dabei sind unterschiedliche Bilder mit unterschiedlichen Beleuchtungsgeometrien aus 1002 assoziiert.

In manchen Beispielen können zwei Paare von Bildern erfasst werden, die jeweils mit komplementären, halbkreisförmigen Beleuchtungsrichtungen assoziiert sind. In anderen Beispielen außerhalb der beanspruchten Erfindung könnten aber auch nur zwei Bilder oder drei Bilder erfasst werden.

Es könnte dann eine Differenzbildung erfolgen, z.B. gemäß

$$\frac{I_{links} - I_{rechts}}{I_{links} + I_{rechts}}$$

$$\frac{I_{oben} - I_{unten}}{I_{oben} + I_{unten}}$$

wobei $I_{links}$ und $I_{rechts}$ die Bilder bezeichnen, die jeweils mit einer links oder rechts orientierten halbkreisförmigen Beleuchtungsgeometrie assoziiert sind und wobei $I_{oben}$ und $I_{unten}$ die Bilder bezeichnen, die jeweils mit einer oben oder unten orientierten halbkreisförmigen Beleuchtungsgeometrie assoziiert sind.

Dann erfolgt in 1004 das Bestimmen eines Ergebnisbilds, welches ein Höhenprofil des Probenobjekts darstellt. Das Bestimmen des Ergebnisbild erfolgt in 1004 basierend auf mehreren Übertragungsfunktionen welche die Abbildung des Probenobjekts mittels des entsprechenden optischen Systems für die entsprechenden Beleuchtungsgeometrien beschreiben. Das Ergebnisbild wird auch basierend auf den in 1003 erfassten Bildern bestimmt. Dazu erfolgt gemäß der beanspruchten Erfindung eine Differenzbildung und ggf. Normierung aus mehreren in 1003 erfassten Bildern, die mit unterschiedlichen Beleuchtungsgeometrien assoziiert sind.

Zum Beispiel könnte das Verfahren gemäß FIG. 10 weiterhin das Skalieren einer Referenz-Übertragungsfunktion auf eine Größe der Apertur der Abbildungsoptik umfassen. Dies bedeutet, dass eine Anpassung der Referenz-Übertragungsfunktion auf die Größe der Apertur der Abbildungsoptik erfolgen kann.

Zusammenfassend wurden voranstehend Techniken beschrieben, um auch bei vergleichsweise großen Aperturen der verwendeten Abbildungsoptik ein Ergebnisbild zu bestimmen, das einen starken Kontrast aufweist, der z.B. die Höhe eines Probenobjekts kodiert. Diese Techniken beruhen auf einer Berücksichtigung der Größe der Apertur der Abbildungsoptik. Dabei kann beispielsweise eine vorgegebene Referenz-Übertragungsfunktion gemäß der Größe der Apertur der Abbildungsoptik skaliert werden. Die Referenz-Übertragungsfunktion kann deshalb auch als artifizielle Übertragungsfunktion bezeichnet werden, weil sie Abweichungen gegenüber der aufgrund der Beleuchtungsgeometrie theoretisch erwarteten Übertragungsfunktion aufweisen kann.

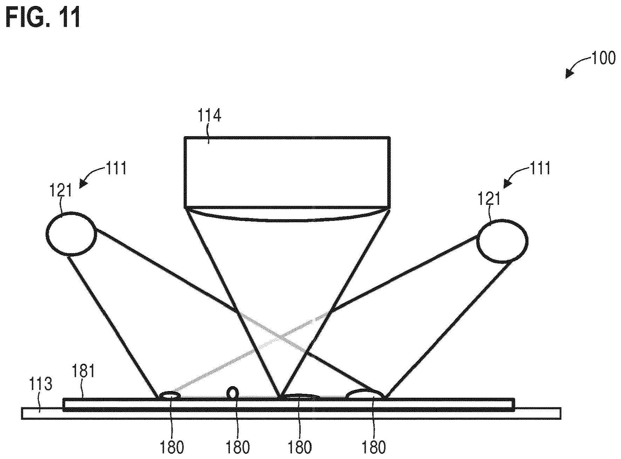

Die hierin beschriebenen Techniken, betreffend die Übertragungsfunktion, gemäß der beanspruchten Erfindung, sind mit einer Auflichtgeometrie kombiniert. Dies ist in Bezug auf das Beispiel der FIG. 11 dargestellt. FIG. 11 illustriert Aspekte in Bezug auf das optische System 100. Insbesondere illustriert FIG. 11 Aspekte in Bezug auf eine Anordnung des Beleuchtungsmodul 111 sowie des Detektors 114 in Bezug auf einen Probenhalter 113, der ein Probenobjekt 181 fixiert. Das Probenobjekt 181 umfasst einzelne Verunreinigungen 180, beispielsweise Fusseln.

In dem Beispiel der FIG. 11 sind das Beleuchtungsmodul 111 und der Detektor bzw. die Abbildungsoptik (in FIG.

11 nicht dargestellt) in Auflichtgeometrie angeordnet, d.h. auf derselben Seite des Probenhalters 113. In dem Beispiel der FIG. 11 sind die Beleuchtungselement 121 durch Lichtquellen implementiert. Beispielsweise könnten die Beleuchtungselemente 121 durch Leuchtdioden etc. implementiert werden.

In manchen Beispielen könnte auch eine Zentralblende vorgesehen sein, die es ermöglicht, das Probenobjekt 180, 181 in Dunkelfeldgeometrie zu beleuchten.

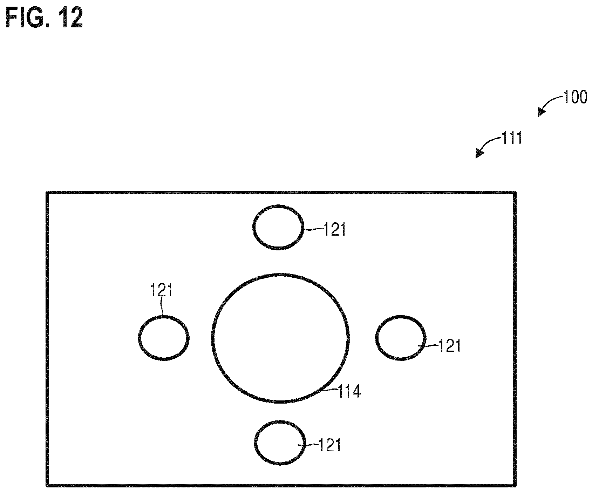

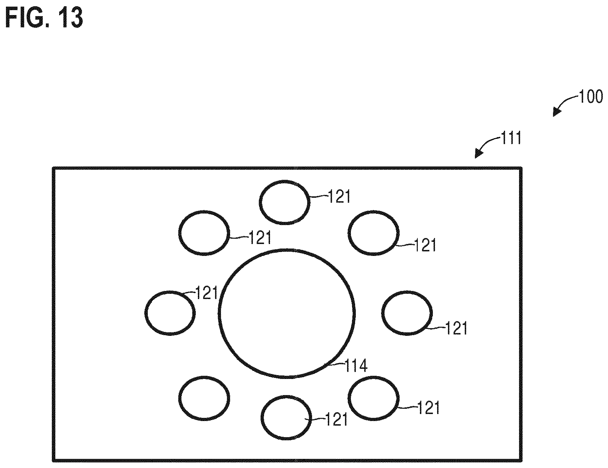

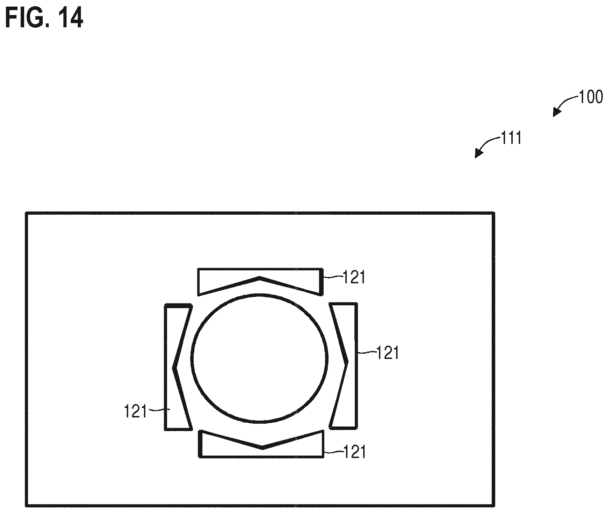

Mittels eines optischen Systems 100 gemäß dem Beispiel der FIG. 11 kann es möglich sein, eine Materialüberprüfung des Probenobjekts 180, 181 durchzuführen. Beispielsweise können Anomalien - wie die Verunreinigungen 180 - erkannt werden. Das Probenobjekt 180, 181 muss dabei nicht lichtdurchlässig sein. Bei solchen Techniken kann erreicht werden, dass durch die winkelvariable Beleuchtung ein Höhenprofil des Probenobjekts 180, 181 zu bestimmen. Dabei treten dann die Verunreinigungen 180 deutlich hervor. FIG. 12 illustriert Aspekte in Bezug auf das optische System 100. FIG. 12 ist eine Aufsicht auf das Beleuchtungsmodul. Darin ist ersichtlich, dass das Beleuchtungsmodul 111 vier konzentrisch in Bezug auf den Detektor 114 angeordnete Beleuchtungselemente 121 als Lichtquellen aufweist. Dabei wären auch Variationen des Beleuchtungsmodul des 111 möglich, vergleiche FIGs. 13 und 14.

Basierend auf dem Ergebnisbild, welches gemäß der hierin beschriebenen Techniken auf Grundlage der Übertragungsfunktion 400 bestimmt wird, können dann bestimmte Anwendungen implementiert werden. Das Ergebnis ,gemäß der beanspruchten Erfindung, ist indikativ für das Höhenprofil des Probenobjekts 180, 181.

Zum Beispiel wäre es möglich, Bereiche gleicher Höhe auf Grundlage des Ergebnisbilds zu bestimmen. Im Allgemeinen können basierend auf einem Ergebnisbild, welches beispielsweise gemäß der hierin beschriebenen Techniken auf Grundlage der Übertragungsfunktion bestimmt wird, Anomalien erkannt werden, die z.B. den Verunreinigungen 180 entsprechen.

Dies bedeutet, dass in dem Ergebnisbild bestimmte Abweichungen von der Norm (Anomalien) identifiziert werden können. Dabei kann die Norm beispielsweise aufgrund von Referenzbereichen in dem Ergebnisbild bestimmt werden oder aber vorgegeben sein. Solche Techniken beruhen auf der Erkenntnis, dass es möglich ist, mittels des Höhenprofils des Probenobjekts die Anomalien besonders gut zu erkennen. Beispielsweise können die Anomalien Verunreinigungen 180 wie beispielsweise Fusseln entsprechen, die auf dem Probenobjekt angeordnet sind und damit eine Abweichung von der generellen Topographie des Probenobjekts 181 bedeuten.

Dabei können in den verschiedenen hierin beschriebenen Beispielen unterschiedliche Techniken eingesetzt werden, um die Anomalien zu erkennen. **In** manchen Beispielen wäre es möglich, dass die Anomalien als Extremwerte im Kontrast des Ergebnisbildes bestimmt werden. Wenn beispielsweise das Ergebnisbild das Höhenprofil des Probenobjekts 181 beschreibt, kann es möglich sein, die Extremwerte als lokale Abweichungen von der mittleren Höhe der Topographie des Probenobjekts zu erkennen. Beispielsweise können solche Extremwerte basierend auf einem Schwellenwertvergleich bestimmt werden. Beispielsweise könnte der Schwellenwert, der bei dem Schwellenwertvergleich berücksichtigt wird, in Bezug auf ein absolutes Maximum und/oder in Bezug auf einen Mittelwert der Kontrastwerte des Ergebnisbildes bestimmt werden.

Alternativ oder zusätzlich können die Anomalien auch durch Techniken des Maschinenlernens bestimmt werden. Beispielsweise könnten künstliche neuronale Netzwerke dazu verwendet werden, um lokale Abweichungen von der Norm zu klassifizieren.

Alternativ oder zusätzlich können auch Techniken verwendet werden, um eine Abweichung von einem Ortsraum-Muster des Probenobjekts 180 zur Erkennung der Anomalien zu verwenden. Beispielsweise könnte das Probenobjekt 181 eine Stoffprobe sein, die aufgrund der Gewebestruktur eine bestimmte Periodizität der Topographie aufweist. **In** manchen Beispielen wäre es möglich, dass eine solche Periodizität bzw. das Ortsraum-Muster der Topographie des Probenobjekts als a-priori Information bekannt ist. **In** anderen Beispielen wäre es aber auch möglich, dass das Ortsraum-Muster durch eine globale Frequenzanalyse des Probenobjekts 181 als Referenz bestimmt wird. Dann wäre es möglich, dass die Anomalien als lokale Abweichungen von diesem Ortsraum-Muster erkannt werden.

Dabei können solche lokalen Abweichungen von dem Ortsraum-Muster auf verschiedene Arten und Weisen erkannt werden. Zum Beispiel wäre es möglich, dass basierend auf dem Ergebnisbild ein Referenzbild erzeugt wird, in welchem das Ortsraum-Muster unterdrückt ist. Dann können in dem Referenzbild die Anomalien besonders deutlich hervortreten. Die Abweichungen von dem Ortsraum-Muster des Probenobjekts können zum Beispiel basierend auf einer Filterung im Ortsfrequenzraum durchgeführt werden. Alternativ oder zusätzlich kann eine Autokorrelation durchgeführt werden, die Änderungen in der Periodizität betont. Es können auch Abweichungen gegenüber einem Referenzbild des Ortsraum-Musters erkannt werden.

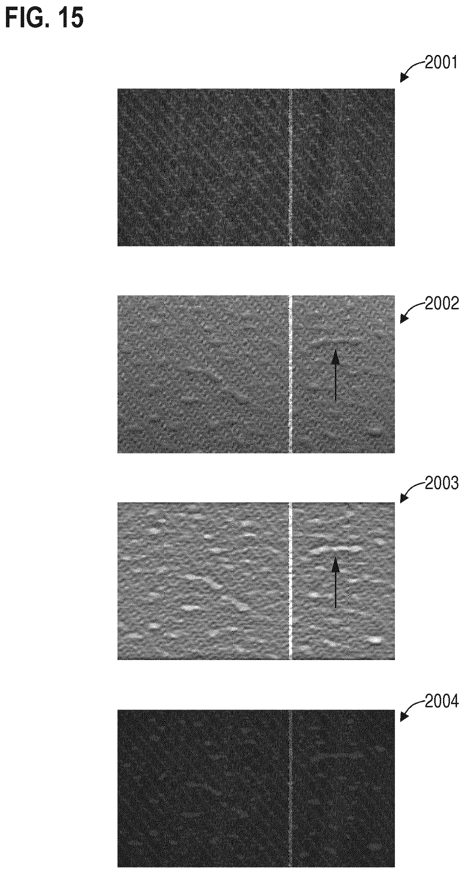

FIG. 15 illustriert experimentelle Ergebnisse für die verschiedenen hierin beschrieben Techniken.

Ein Bild 2001 beinhaltet ein Abbild eines Textilgewebes. Das Bild 2001 wurde in Auflichtgeometrie mit einem Beleuchtungsmodul 111 gemäß FIG. 12 erfasst.

Das Ergebnisbild 2002 wurde durch Techniken erhalten, die in DE 10 2014 112 242 A1 beschrieben sind. In dem Ergebnisbild 2002 ist eine Verunreinigung des Textilgewebes illustriert. In Ergebnisbild 2002 ist deutlich ersichtlich, dass die Oberkante der Verunreinigung einen weißen Kontrast aufweist und die Unterkante einen dunklen Kontrast aufweist, während die Verunreinigung zentral einen Kontrast aufweist, der dem mittleren Kontrast des Ergebnisbilds 2002 entspricht. Deshalb weist das Ergebnisbild 2002 zwar eine Kontrast auf, der die Höhe des Probenobjekts codiert; jedoch bildet das Ergebnisbild 2002 kein Höhenprofil ab, sondern ist vielmehr proportional zum Gradienten des Höhenprofils.

Dies ist anders in Ergebnisbild 2003. Das Ergebnisbild 2003 wurde gemäß der hierin beschriebenen Techniken bestimmt, d.h. unter Verwendung einer geeigneten Übertragungsfunktion. Dabei ist auch in dem Ergebnisbild 2003 die Verunreinigung mit einem Pfeil markiert. Es ist deutlich ersichtlich, dass die Verunreinigung zentral einen helleren Kontrast aufweist, als entlang ihrer Kanten. Der Kontrast der Verunreinigung in ihrem Zentralbereich ist auch heller als der mittlere Kontrast des Ergebnisbildes 2003. Damit indiziert das Ergebnisbild 2003 das Höhenprofil des Probenobjekts. Die diversen Verunreinigungen bzw. Fusseln treten in dem Ergebnisbild 2003 mit besonders hellem Kontrast hervor.

Dies kann in verschiedenen Beispielen dazu ausgenutzt werden, um Anomalien in dem Ergebnisbild 2003 zu erkennen. Dazu wäre es in einer einfachen Implementierung möglich, lokale Extremwerte des Kontrasts des Ergebnisbildes 2003 erkennen. Zum Beispiel könnte ein Schwellenwertvergleich durchgeführt werden, wobei der entsprechende Schwellenwert beispielsweise in Bezug auf ein globales Maximum oder ein globales Minimum der Kontrastwerte des Ergebnisbilds 2003 bestimmt sein kann. Eine entsprechende Auswertung ist im Bild 2004 dargestellt.

Das Textilgewebe, welches durch die Bilder 2001-2004 abgebildet wird, weist auch ein charakteristisches Ortsraum-Muster auf. Das Ortsraum-Muster entspricht dem Gewebe des verwendeten Garns. Es kann alternativ oder zusätzlich zu dem obenstehend beschriebenen Schwellenwertvergleich auch möglich sein, die Anomalien basierend auf diesem Ortsraum-Muster zu erkennen. Beispielsweise könnten diese Anomalien als Abweichungen von dem Ortsraum-Muster des Probenobjekts erkannt werden. Dazu könnte zum Beispiel eine Filterung im Ortsfrequenzraum durchgeführt werden oder beispielsweise eine Autokorrelation in ein oder zwei Dimensionen. In anderen Beispielen könnte auch ein Referenzbild verwendet werden, welches das Ortsraum-Muster abbildet.

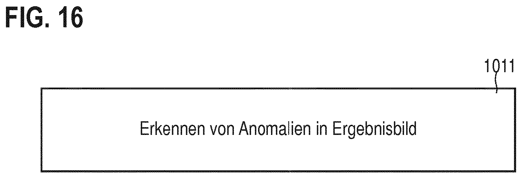

FIG. 16 ist ein Flussdiagramm eines beispielhaften Verfahrens. Dabei erfolgt in 1011 das Erkennen von Anomalien in einem Ergebnisbild. Beispielsweise könnte das Ergebnisbild durch ein Verfahren gemäß dem Beispiel der FIG. 10 bestimmt werden.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Die Skalierung der Amplituden der verschiedenen hierin beschriebenen Übertragungsfunktionen ist rein beispielhaft. Zum Beispiel wurden in den verschiedenen hierin beschriebenen Beispielen oftmals Übertragungsfunktionen mit einer Amplitude von +1 bzw. -1 dargestellt, jedoch kann es in anderen Beispielen auch möglich sein, Übertragungsfunktionen mit anderen Amplituden zu verwenden.

Weiterhin wurden beispielsweise verschiedene Implementierungen in Bezug auf Beleuchtung des Probenobjekts mit partiell inkohärentem Licht beschrieben. Dabei ist die Bandbreite der übertragenen Ortsfrequenzen gleich der doppelten Apertur der Abbildungsoptik. In anderen Beispielen könnten aber auch andere Techniken zur Beleuchtung verwendet werden, sodass die Bandbreite der übertragenen Ortsfrequenzen anders dimensioniert ist. In den verschiedenen hierin beschriebenen Beispielen kann dies berücksichtigt werden, indem beispielsweise eine entsprechende Skalierung einer Referenz-Übertragungsfunktion bis zum theoretischen Maximum der übertragenen Ortsfrequenzen erfolgt.

Weiterhin wurden obenstehend verschiedene Beispiele in Bezug auf das Erkennen von Anomalien im Ergebnisbild beschrieben. Im Allgemeinen könnten auch andere Techniken der Materialprüfung auf Grundlage des Ergebnisbilds eingesetzt werden.

**Patentansprüche**

1. Optisches System (100), das umfasst:

   - ein Beleuchtungsmodul (111), das eingerichtet ist, um ein Probenobjekt (180, 181) mit mehreren Paaren von winkelvariablen Beleuchtungsgeometrien (300) zu beleuchten, die mit unterschiedlichen Beleuchtungsrichtungen assoziiert sind,
   - eine Abbildungsoptik (112), die eingerichtet ist, um ein Abbild des mit den mehreren Paaren von winkelvariablen Beleuchtungsgeometrien (300) beleuchteten Probenobjekts (180, 181) auf einem Detektor (114) zu erzeugen,
   - den Detektor (114), der zusammen mit dem Beleuchtungsmodul (111) in Auflichtgeometrie angeordnet ist und der eingerichtet ist, um basierend auf dem Abbild mehrere Paare von Bildern des Probenobjekts (180, 181) bei den mehreren Paaren von winkelvariablen Beleuchtungsgeometrien zu erfassen, und
   - eine Steuerung (115), die eingerichtet ist, um basierend auf mehreren Übertragungsfunktionen (400) und einer paarweisen Differenzbildung der mehreren Paare von Bildern durch digitale Nachbearbeitung der mehreren Paare von Bildern ein Ergebnisbild zu bestimmen, das ein Höhenprofil des Probenobjekts darstellt,

wobei jeder der mehreren Übertragungsfunktionen (400) in Abhängigkeit von einem entsprechenden der mehreren Paare von winkelvariablen Beleuchtungsgeometrien (300) bestimmt ist,
und wobei beim Bestimmen des Ergebnisbildes mittels inverser Fouriertransformation eine Summation über das Produkt aus jeder der mehreren Übertragungsfunktionen und der jeweils entsprechenden Ortsfrequenzraum-Repräsentation der paarweisen Differenzbildungen des jeweils entsprechenden Paars von Bildern durchgeführt wird.

2. Optisches System (100) nach Anspruch 1,
wobei das Beleuchtungsmodul (111) eingerichtet ist, um das Probenobjekt (180, 181) in Dunkelfeldgeometrie zu beleuchten.

3. Optisches System (100) nach Anspruch 1 oder 2,

wobei die Steuerung (115) weiterhin eingerichtet ist, um Anomalien im Ergebnisbild zu erkennen,
wobei die Anomalien Extremwerte im Kontrast des Ergebnisbilds umfassen.

4. Optisches System (100) nach einem der voranstehenden Ansprüche,

wobei die Steuerung (115) weiterhin eingerichtet ist, um Anomalien im Ergebnisbild zu erkennen,
wobei die Anomalien Abweichungen von einem Ortsraum-Muster des Probenobjekts (180, 181) umfassen.

5. Optisches System (100) nach Anspruch 4,
wobei die Steuerung (115) eingerichtet ist, um die Abweichungen von dem Ortsraum-Muster des Probenobjekts (180, 181) basierend auf zumindest einer der folgenden Techniken zu bestimmen: Fourier-Raum-Filterung; Autokorrelation; Abweichungen gegenüber einem Referenzbild des Ortsraums-Musters.

6. Optisches System (100) nach einem der voranstehenden Ansprüche,
wobei die Übertragungsfunktionen (400) für Ortsfrequenzen innerhalb der einfachen oder doppelten Apertur der Abbildungsoptik (112) keine Betragswerte kleiner als 5 % eines Maximums aller Betragswerte der Übertragungsfunktionen (400) für Ortsfrequenzen innerhalb der einfachen oder doppelten Apertur der Abbildungsoptik (112) aufweisen, optional keine Werte kleiner als 2 %, weiter optional keine Werte kleiner als 0,5 %.

7. Optisches System (100) nach einem der voranstehenden Ansprüche,
wobei die Übertragungsfunktionen (400) für Ortsfrequenzen innerhalb der Apertur der Abbildungsoptik (112) keine lokalen Extremwerte aufweisen.

8. Optisches System (100) nach einem der voranstehenden Ansprüche,
wobei die Übertragungsfunktionen (400) Stufenfunktion sind.

9. Optisches System (100) nach einem der voranstehenden Ansprüche,
wobei die Übertragungsfunktionen (400) monoton steigende oder monoton fallende Funktion sind, optional lineare Funktion oder eine Sigmoid-Funktion.

10. Optisches System (100) nach einem der voranstehenden Ansprüche,
wobei die Übertragungsfunktionen (400) eine Symmetrieachse (405) aufweisen, die einer Symmetrieachse (305) des mindestens einen Paars von Beleuchtungsgeometrien (300) entspricht.

11. Optisches System (100) nach einem der voranstehenden Ansprüche,
wobei die Übertragungsfunktionen (400) für Ortsfrequenzen außerhalb der einfachen oder doppelten Apertur der Abbildungsoptik (112) keine Betragswerte größer als 5 % eines Maximums aller Betragswerte der Übertragungsfunktion (400) für Ortsfrequenzen innerhalb der einfachen oder doppelten Apertur der Abbildungsoptik (112) aufweisen, optional keine Werte größer als 2 %, weiter optional keine Werte größer als 0,5 %.

12. Optisches System (100) nach einem der voranstehenden Ansprüche,
wobei die Steuerung (115) eingerichtet ist, um das Ergebnisbild basierend auf einer Tichonov-Regularisierung mit inverser Fourier-Transformation zu bestimmen.

13. Verfahren, das umfasst:

EP 3 615 887 B1

- Beleuchten eines Probenobjekts (180, 181) mit mehreren Paaren von winkelvariablen Beleuchtungsgeometrien (300), die mit unterschiedlichen Beleuchtungsrichtungen assoziiert sind,

- Abbilden des mit den mehreren Paaren von winkelvariablen Beleuchtungsgeometrien (300) beleuchteten Probenobjekts (180, 181) auf einen Detektor (114) auf einen Detektor in Auflichtgeometrie,

- basierend auf dem Abbild: Erfassen von mehreren Paaren von Bildern des Probenobjekts (180, 181) bei den mehreren Paaren von winkelvariablen Beleuchtungsgeometrien durch den Detektor, und

- basierend auf mehreren Übertragungsfunktionen (400) und einer paarweisen Differenzbildung der mehreren Paare von Bildern: Bestimmen eines Ergebnisbilds durch digitale Nachbearbeitung der mehreren Bilder,

wobei jeder der mehreren Übertragungsfunktionen (400) in Abhängigkeit von einem entsprechenden der mehreren Paare von winkelvariablen Beleuchtungsgeometrien (300) bestimmt ist,

und wobei beim Bestimmen des Ergebnisbildes mittels inverser Fouriertransformation eine Summation über das Produkt aus jeder der mehreren Übertragungsfunktionen und der jeweils entsprechenden Ortsfrequenzraum-Repräsentation der paarweisen Differenzbildungen des jeweils entsprechenden Paars von Bildern durchgeführt wird.

## Claims

1. Optical system (100), comprising:

   - an illumination module (111), which is set up for illuminating a sample object (180, 181) with multiple pairs of angle-variable illumination geometries (300) which are associated with different illumination directions,
   - an imaging optical unit (112), which is set up for producing an imaged representation of the sample object (180, 181) that is illuminated with the multiple pairs of angle-variable illumination geometries (300) on a detector (114),
   - the detector (114), which is arranged together with the illumination module (111) in incident light geometry and which is set up for capturing, on the basis of the imaged representation, multiple pairs of images of the sample object (180, 181) in the multiple pairs of angle-variable illumination geometries, and
   - a controller (115), which is set up for determining a result image, which represents a height profile of the sample object, on the basis of multiple transfer functions (400) and a pairwise subtraction of the multiple pairs of images by way of digital post-processing of the multiple pairs of images,

   wherein each of the multiple transfer functions (400) is determined on the basis of a corresponding pair of the multiple pairs of angle-variable illumination geometries (300), and wherein, when determining the result image by means of an inverse Fourier transform, a summation is performed over the product of each of the multiple transfer functions and the respective corresponding spatial frequency domain representation of the pairwise subtractions of the respective corresponding pair of images.

2. Optical system (100) according to Claim 1,
   wherein the illumination module (111) is set up to illuminate the sample object (180, 181) in dark field geometry.

3. Optical system (100) according to Claim 1 or 2,

   wherein the controller (115) is furthermore set up for detecting anomalies in the result image,
   wherein the anomalies comprise extremal values in the contrast of the result image.

4. Optical system (100) according to any of the preceding claims,

   wherein the controller (115) is furthermore set up for detecting anomalies in the result image,
   wherein the anomalies comprise deviations from a real-space pattern of the sample object (180, 181).

5. Optical system (100) according to Claim 4,
   wherein the controller (115) is set up to determine the deviations from the real-space pattern of the sample object (180, 181) based on at least one of the following techniques: Fourier space filtering; autocorrelation; deviations with respect to a reference image of the real-space pattern.

6. Optical system (100) according to any of the preceding claims,
   wherein the transfer functions (400) have for spatial frequencies within the single aperture or twice the aperture of the imaging optical unit (112) no absolute values smaller than 5% of a maximum of all absolute values of the transfer

13

functions (400) for spatial frequencies within the single aperture or twice the aperture of the imaging optical unit (112), optionally no values smaller than 2%, further optionally no values smaller than 0.5%.

7. Optical system (100) according to any of the preceding claims,
wherein the transfer functions (400) for spatial frequencies within the aperture of the imaging optical unit (112) have no local extremal values.

8. Optical system (100) according to any of the preceding claims,
wherein the transfer functions (400) are step functions.

9. Optical system (100) according to any of the preceding claims,
wherein the transfer functions (400) are monotonically increasing or monotonically decreasing functions, optionally linear functions or sigmoid functions.

10. Optical system (100) according to any of the preceding claims,
wherein the transfer functions (400) have an axis of symmetry (405) that corresponds to an axis of symmetry (305) of the at least one pair of illumination geometries (300).

11. Optical system (100) according to any of the preceding claims,
wherein the transfer functions (400) have for spatial frequencies outside the single aperture or twice the aperture of the imaging optical unit (112) no absolute values greater than 5% of a maximum of all absolute values of the transfer function (400) for spatial frequencies within the single aperture or twice the aperture of the imaging optical unit (112), optionally no values greater than 2%, further optionally no values greater than 0.5%.

12. Optical system (100) according to any of the preceding claims,
wherein the controller (115) is set up for determining the result image based on a Tikhonov regularization with inverse Fourier transform.

13. Method, which comprises:

- illuminating a sample object (180, 181) with multiple pairs of angle-variable illumination geometries (300) which are associated with different illumination directions,
- imaging the sample object (180, 181) illuminated with the multiple pairs of angle-variable illumination geometries (300) on a detector (114), on a detector in reflected-light geometry,
- on the basis of the imaged representation: capturing multiple pairs of images of the sample object (180, 181) in the multiple pairs of angle-variable illumination geometries by the detector, and
- on the basis of multiple transfer functions (400) and a pairwise subtraction of the multiple pairs of images: determining a result image by way of digital post-processing of the multiple images,
wherein each of the multiple transfer functions (400) is determined on the basis of a corresponding pair of the multiple pairs of angle-variable illumination geometries (300),
and wherein, when determining the result image by means of an inverse Fourier transform, a summation is performed over the product of each of the multiple transfer functions and the respective corresponding spatial frequency domain representation of the pairwise subtractions of the respective corresponding pair of images.

**Revendications**

1. Système optique (100) comprenant :

- un module d'éclairage (111), conçu pour éclairer un objet échantillon (180, 181) au moyen d'une pluralité de paires de géométries d'éclairage à angle variable (300) associées à des directions d'éclairage différentes,
- une optique (112) de formation d'image, conçue de façon à produire sur un détecteur (114) une image de l'objet échantillon (180, 181) éclairé par la pluralité de paires de géométries d'éclairage à angle variable (300),
- le détecteur (114) étant agencé avec le module d'éclairage (111) selon une géométrie de lumière incidente et étant conçu pour enregistrer, sur la base de l'image, une pluralité de paires d'images de l'objet échantillon (180, 181) avec la pluralité de paires de géométries d'éclairage à angle variable, et
- un dispositif de commande (115) qui est conçu de façon à déterminer, sur la base de plusieurs fonctions de transfert (400) et d'une différenciation par paires de la pluralité de paires d'images par post-traitement numérique de la pluralité de paires d'images, une image de résultat qui représente un profil de hauteur de l'objet échantillon, chacune desdites plusieurs fonctions de transfert (400) étant déterminée en fonction d'une paire correspondante parmi la pluralité de paires de géométries d'éclairage à angle variable (300),

et dans lequel, lors de la détermination de l'image de résultat au moyen d'une transformée de Fourier inverse, une sommation est effectuée sur le produit de chacune parmi la pluralité de fonctions de transfert et de la représentation correspondante respective dans l'espace fréquentiel local des différenciations par paires de la paire correspondante respective d'images.

2. Système optique (100) selon la revendication 1,
   dans lequel le module d'éclairage (111) est conçu de façon à éclairer l'objet échantillon (180, 181) selon une géométrie en champ sombre.

3. Système optique (100) selon la revendication 1 ou la revendication 2,

   dans lequel le dispositif de commande (115) est en outre conçu de façon à détecter des anomalies dans l'image de résultat,
   les anomalies comprenant des valeurs extrêmes dans le contraste de l'image de résultat.

4. Système optique (100) selon l'une des revendications précédentes,

   dans lequel le dispositif de commande (115) est en outre conçu de façon à détecter des anomalies dans l'image de résultat,
   les anomalies comprenant des écarts par rapport à un modèle spatial local de l'objet échantillon (180, 181).

5. Système optique (100) selon la revendication 4,
   dans lequel le dispositif de commande (115) est configuré pour déterminer les écarts par rapport au modèle spatial local de l'objet échantillon (180, 181) sur la base d'au moins une des techniques suivantes : filtrage dans l'espace de Fourier ; autocorrélation ; écarts par rapport à une image de référence du modèle spatial local.

6. Système optique (100) selon l'une des revendications précédentes,
   dans lequel les fonctions de transfert (400) pour les fréquences spatiales à l'intérieur de l'ouverture simple ou double de l'optique (112) de formation d'image ne présentent pas de valeurs absolues inférieures à 5 % d'un maximum de toutes les valeurs absolues des fonctions de transfert (400) pour des fréquences spatiales à l'intérieur de l'ouverture simple ou double de l'optique (112) de formation d'image, optionnellement aucune valeur inférieure à 2 %, et, optionnellement encore, aucune valeur inférieure à 0,5 %.

7. Système optique (100) selon l'une des revendications précédentes,
   dans lequel les fonctions de transfert (400) pour des fréquences spatiales à l'intérieur de l'ouverture de l'optique (112) de formation d'image ne présentent pas de valeurs extrêmes locales.

8. Système optique (100) selon l'une des revendications précédentes,
   dans lequel les fonctions de transfert (400) sont des fonctions échelonnées.

9. Système optique (100) selon l'une des revendications précédentes,
   dans lequel les fonctions de transfert (400) sont des fonctions monotones croissantes ou monotones décroissantes, optionnellement des fonctions linéaires ou des fonctions sigmoïdales.

10. Système optique (100) selon l'une des revendications précédentes,
    dans lequel les fonctions de transfert (400) présentent un axe de symétrie (405) qui correspond à un axe de symétrie (305) de ladite au moins une paire de géométries d'éclairage (300).

11. Système optique (100) selon l'une des revendications précédentes,
    dans lequel les fonctions de transfert (400) pour des fréquences spatiales situées en dehors de l'ouverture simple ou double de l'optique (112) de formation d'image n'ont pas de valeurs absolues supérieures à 5 % d'un maximum de toutes les valeurs absolues de la fonction de transfert (400) pour des fréquences spatiales situées à l'intérieur de l'ouverture simple ou double de l'optique (112) de formation d'image, optionnellement aucune valeur supérieure à 2 %, et, optionnellement encore, aucune valeur supérieure à 0,5 %.

12. Système optique (100) selon l'une des revendications précédentes,
dans lequel le dispositif de commande (115) est conçu de façon à déterminer l'image de résultat sur la base d'une régularisation de Tikhonov avec transformée de Fourier inverse.

13. Procédé comprenant :

- le fait d'éclairer un objet échantillon (180, 181) au moyen d'une pluralité de paires de géométries d'éclairage à angle variable (300) associées à différentes directions d'éclairage,
- le fait de former une image sur un détecteur (114) de l'objet échantillon (180, 181) éclairé par la pluralité de paires de géométries d'éclairage à angle variable (300) selon une géométrie de lumière incidente,
- sur la base de l'image formée : le fait, par le détecteur, d'acquérir une pluralité de paires d'images de l'objet échantillon (180, 181) selon la pluralité de paires de géométries d'éclairage à angle variable, et
- sur la base de la pluralité de fonctions de transfert (400) et d'une différenciation par paires de la pluralité de paires d'images : le fait de déterminer une image de résultat par post-traitement numérique de la pluralité d'images, chacune desdites plusieurs fonctions de transfert (400) étant déterminée en fonction d'une paire correspondante parmi la pluralité de paires de géométries d'éclairage à angle variable (300),
et dans lequel, lors de la détermination de l'image de résultat au moyen d'une transformée de Fourier inverse, une sommation est effectuée sur le produit de chacune parmi la pluralité de fonctions de transfert et de la représentation correspondante respective dans l'espace fréquentiel local des différenciations par paires de la paire correspondante respective d'images.

# FIG. 1

100

111

Beleuchtungsmodul

113

Probenhalter

112

Optik

114

Detektor

115

Steuerung

**FIG. 2**

**FIG. 3**

FIG. 4

FIG. 5

FIG. 6

400

405

2N$_A$

2N$_A$

u$_y$

u$_x$

FIG. 7

400

405

2N$_A$

u$_y$

u$_x$

2N$_A$

**FIG. 8**

**FIG. 9**

## FIG. 10

```
                                                          1001

        ┌──────────────────────────────────────────┐
        │                                          │
        │        Fixieren eines Probenobjekts       │
        │                                          │
        └──────────────────────────────────────────┘
                           │
                           ▼                          1002

        ┌──────────────────────────────────────────┐
        │       Beleuchten des Probenobjekts mit     │
        │     strukturierter Beleuchtungsgeometrie   │
        │                                          │
        └──────────────────────────────────────────┘
                           │
                           ▼                          1003

        ┌──────────────────────────────────────────┐
        │  Erfassen mindestens eines Bilds des Probenobjekts │
        │            mittels eines Detektors         │
        │                                          │
        └──────────────────────────────────────────┘
                           │
                           ▼                          1004

        ┌──────────────────────────────────────────┐
        │        Bestimmen eines Ergebnisbilds       │
        │    basierend auf einer Übertragungsfunktion │
        │                                          │
        └──────────────────────────────────────────┘
```

FIG. 11

# FIG. 12

**FIG. 13**

FIG. 14

## FIG. 15

FIG. 16

1011

Erkennen von Anomalien in Ergebnisbild

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015110339 A

- DE 102014112242 A1

**In der Beschreibung aufgeführte Nicht-Patentliteratur**

- **Z.B. PRADOS** ; **EMMANUEL** ; **OLIVIER FAUGE-RAS**. Shape from shading. *Handbook of mathematical models in computer vision*, 2006, 375-388